# EUROPÄISCHE PATENTSCHRIFT

(11) **EP 0 693 684 B1**
(45) Veröffentlichungstag und Bekanntmachung des Hinweises auf die Patenterteilung: **05.02.2003**
(21) Anmeldenummer: 95111144.2
(22) Anmeldetag: 14.07.1995
(51) Int. Cl.: G01N 21/47, G01N 21/86, G01N 35/00

(54) **Auswertevorrichtung zur reflektrometrischen Auswertung von Testelementen**
Device for evaluating test strips by reflectometry
Dispositif pour l'évaluation réflectométrique de bandes test

(30) Priorität: 19.07.1994 DE 4425432
(43) Veröffentlichungstag der Anmeldung: 24.01.1996
(73) Patentinhaber: Roche Diagnostics GmbH, 68298 Mannheim (DE)
(72) Erfinder: Augstein, Manfred, D-68259 Mannheim (DE)

(56) Entgegenhaltungen:
- EP-A- 0 259 797
- EP-A- 0 388 168
- EP-A- 0 428 184
- FR-A- 2 378 277
- PATENT ABSTRACTS OF JAPAN vol. 008, no. 129 (P-280), 15.Juni 1984 & JP-A-59 032851 (KONISHIROKU SHASHIN KOGYO KK), 22.Februar 1984,

## Beschreibung

Die Erfindung betrifft eine Auswertevorrichtung zur reflektometrischen Auswertung von Testelementen mit
- einem Meßkopf, der einen Sender und einen Empfänger besitzt,
- eine Testelementauflage, auf welcher ein zu untersuchendes Testelement gelagert wird,
- einen Abstandshalter, mit einer oder mehreren Meßöffnungen, der sich zwischen Testelement und Meßkopf befindet und der einen Abstand zwischen Testfeldoberfläche des Teststreifens und Meßkopf definiert,
wobei sich das Testelement zwischen Testelementauflage und Abstandshalter befindet und der Meßkopf auf dem Abstandshalter aufliegt.

Die Erfindung fällt in das Gebiet der klinischen Analyse, in der Testelemente, insbesondere Teststreifen, reflektometrisch ausgewertet werden, um die Anwesenheit und Konzentration bestimmter Analyten in der Probenflüssigkeit zu bestimmen.

Im Stand der Technik sind automatisch arbeitende Vorrichtungen bekannt, die zur reflektometrischen Auswertung von Teststreifen mit mehreren Testfeldern dienen. Das Dokument EP 0 259 797 offenbart eine Vorrichtung mit einem Meßkopf, der mit unterschiedlichen Lichtquellen unterschiedlicher Wellenlängen ausgestattet ist und zur Vermessung mehrerer Teststreifen geeignet ist. Die Vorrichtung enthält einen Positionsdetektor, der anhand von Positionsmarkierungen ein Abfahren des Meßkopfes über Testfelder der Teststreifen mittels Führungseinrichtungen ermöglicht.

Weiterhin beschreibt die europäische Patentanmeldung EP-A-0 428 184 eine reflektometrische Auswertung von Teststreifen mit mehreren Testfeldern. Zur Auswertung wird ein zu untersuchender Teststreifen durch Blattfedern festgehalten, während ein Meßkopf mit einer Vielzahl von Sende- und Empfangsvorrichtungen die Testfelder des Teststreifens synchron auswertet. Die Testfelder werden mittels Glasfasern, die in den Meßkopf eingeführt sind, bestrahlt. Von den Testfeldern reflektierte Strahlung wird ebenfalls durch Glasfasern aufgenommen und einem Sensor zugeführt. Sowohl die Strahlung aussendenden als auch die Strahlung aufnehmenden Glasfasern sind im Meßkopf mit Schrauben positioniert.

Der Stand der Technik weist den Nachteil auf, daß zur Auswertung eines Teststreifens mit mehreren Testfeldern eine Vielzahl von Sendern und Empfängern notwendig ist, wenn der Abstand von Testfeldern und Meßoptik berücksichtigt werden soll. Dies bedeutet, daß jedes Paar von Sender und Empfänger separat justiert werden muß. Aufgrund der in EP-A-0 428 184 beschriebenen Halterung des Teststreifens kann ein genau definierter Abstand von Meßkopf und Testfeld nur durch einen sehr hohen Aufwand gewährleistet werden, da die gegenseitige Positionierung von Teststreifen und Meßkopf über eine Vielzahl von Bauteilen erfolgt, von denen jedes einzelne Fertigungstoleranzen aufweist. Bei dieser indirekten Kopplung von Meßkopf und Teststreifen kann außerdem schnell eine Dejustierung durch thermische oder mechanische Einwirkungen erfolgen.

Es war Aufgabe der Erfindung, eine Auswertevorrichtung für Testelemente zur Verfügung zu stellen, bei welcher der Justieraufwand auf ein Minimum reduziert ist und bei der eine eingestellte Justierung über eine lange Betriebszeit der Auswertevorrichtung gewährleistet werden kann. Es war weiterhin Aufgabe der Erfindung, eine Vorrichtung vorzuschlagen, bei der Toleranzen des Abstandes von Testfeldern und Meßkopf gering sind.

Der Erfindung liegt eine Auswertevorrichtung zur reflektometrischen Auswertung von Testelementen mit nebeneinander angeordneten Testfeldern zugrunde. Die Auswertevorrichtung besitzt einen Meßkopf, der einen Sender und einen Empfänger beinhaltet und eine Testelementauflage, auf der ein zu untersuchendes Testelement gelagert wird, weiterhin einen Abstandshalter mit einer oder mehreren Meßöffnungen. Zur Auswertung befindet sich ein Testelement zwischen der Testelementauflage und dem Abstandshalter und der Meßkopf wird auf dem Abstandshalter von Meßöffnung zu Meßöffnung bewegt, wobei der Abstandshalter (2) ein Höhenprofil mit zwei oder mehr Auflagebereichen (6, 7) in verschiedenen Höhen für den Meßkopf aufweist und die zwei oder mehr Auflagebereiche verschiedenen Meßöffnungen zugeordnet sind. Die genannte Auswertevorrichtung dient zur Auswertung von Testelementen mit Testfeldern. Verfahren zur Auswertung von Probeflüssigkeiten mit Testelementen werden besonders im Bereich der klinischen Diagnostik eingesetzt, um Probeflüssigkeiten, wie z. B. Urin, Blut, Serum, Gewebsflüssigkeit und Speichel auf Anwesenheit und Konzentration von Analyten zu untersuchen. Im Handel sind solche Testelemente erhältlich, die eine Vielzahl, z. B. 9 oder 12 Testfelder aufweisen, von denen jedes zur Auswertung eines spezifischen Analyten dient.

Bei der gebräuchlichsten Art von Testelementen befinden sich rechteckige Testfelder mit Kantenlängen von wenigen Millimetern und einer Dicke von mehreren zehntel Millimetern nebeneinander angeordnet auf einem Teststreifenhalter. Der Teststreifenhalter ist in der Regel ein rechteckiger Streifen mit einer Länge von einigen Zentimetern und einer Breite von mehreren Millimetern. Die hier beschriebenen Testelemente werden im Stand der Technik auch als Teststreifen bezeichnet

Die Teststreifen können weiterhin Kennzeichnunge, wie z.B. Strichcodes, aphanumerische Zeichen und dergleichen besitzen, die analog zu den Testfeldern der Teststreifen detektiert werden. Es ist jedoch erfindungsgemäß auch möglich, daß die Auswertevorrichtungen zusätzlich ein Lesegerät für Kennzeichnungen auf Teststreifen besitzt

Mit einer der Erfindung zugrundeliegenden Vorrichtung werden die Testfelder durch einen Sender mit Strahlung aus dem sichtbaren, dem infraroten oder dem ultravioletten Spektralbereich bestrahlt. Als Sender werden aus Kostengründen in der Regel Leuchtdioden (LEDs) eingesetzt. Es sind jedoch auch andere Sender, gegebenenfalls unter zusätzlicher Verwendung von optischen Filtern, einsetzbar.

Die von den Testfeldern reflektierte Strahlung oder ein repräsentativer Teil davon, wird durch einen Empfänger detektiert. Als Empfänger eignen sich besonders Halbleiterdetektoren, wie z. B. Photodioden, Phototransistoren oder photovoltaische Elemente. Vorteilhaft können solche Empfänger eingesetzt werden, deren Empfindlichkeitsmaximum dem Emissionsspektrum des Senders angepaßt ist. Gegebenenfalls kann die in den Empfänger eintretende Strahlung zuvor durch Filter selektiert werden.

Erfindungsgemäß sind Sender und Empfänger gemeinsam in einem Meßkopf untergebracht, so daß eine gegenseitige Justierung von Sender und Empfänger auf einfache Weise erfolgen kann. Bei Verwendung eines einzelnen Meßkopfes sollte dieser so bewegbar sein, daß alle Meßöffnungen des Abstandshalters erreicht werden können. Der Meßkopf sollte also entlang der Meßöffnungen bewegt werden können. Die unterschiedlichen Dicken verschiedener Abstandshalter oder auch verschiedene Dickebereiche eines Abstandshalters erfordern es, daß der Meßkopf in seiner Höhe, d.h. senkrecht zum Abstandshalter bewegbar ist. Eine Beweglichkeit in dieser Raumrichtung ist auch von Vorteil, wenn der Meßkopf aus einer Ruheposition auf den Abstandshalter abgesenkt werden soll. In der dritten Raumrichtung kann der Meßkopf starr justiert sein, oder er kann auch in Grenzen frei beweglich sein, wenn seine Justierung oberhalb der Meßöffnungen z.B. durch eine Führungsschiene am Abstandshalter erreicht wird.

Eine erfindungsgemäße Auswertevorrichtung beinhaltet weiterhin eine Testelementauflage, auf welcher das zu untersuchende Testelement gelagert wird. Die Testelementauflage kann durch eine ebene Fläche realisiert werden, die plan ist und das Testelement zumindest in dem Bereich, der Testfelder trägt, mechanisch unterstützt. Die Teststreifenauflage ist bevorzugt raumfest, sie kann jedoch auch beweglich sein. Sie muß durch Andruck des Abstandshalters in eine definierte Endposition gelangen können.

Einen wesentlichen Aspekt der Erfindung bildet der Abstandshalter, da dieser die Auswertung einzelner Testfelder in definiertem Abstand ermöglicht. Der Abstandshalter weist im wesentlichen die Form einer länglichen Platte mit einer Länge von einigen Zentimetern, einer Breite von wenigen Zentimetern und einer Dicke von einigen Millimetern auf. Der Abstandshalter kann bevorzugt integral aus einem Kunststoff gefertigt sein. Besonders geeignete Kunststoffe sind Polyoxymethylen und Polyphenylenoxid.

In der Fläche des Abstandshalters befinden sich Meßöffnungen. Durch diese werden die Testfelder eines Testelements bestrahlt und ebenfalls die reflektierte Strahlung tritt durch die Meßöffnungen hindurch. Die Meßöffnungen sind so angeordnet, daß die Testfelder eines unterliegenden Testelements zugänglich sind. Dies bedeutet, daß die Anordnung der Meßöffnungen der Anordnung der Testfelder auf den Testelementen entspricht. Bevorzugt sind die Meßöffnungen in Größe und Gestalt so bemessen, daß sie die Testfelder vollständig zugänglich machen, jedoch auch nicht wesentlich größer sind als die Testfelder, um Störsignale aus Randbereichen weitestgehend zu vermeiden. Bevorzugt besitzen die Meßöffnungen eine rechteckige Gestalt und sind von der dem Meßkopf zugewandten Seite zu der dem Teststreifen zugewandten Seite konisch verjüngt.

Die Meßöffnungen sind vorzugsweise Ausnehmungen im Abstandshalter, die vom Abstandshalter umschlossen werden. Unter Meßöffnungen sollen jedoch auch solche Ausnehmungen verstanden werden, die nur zum Teil vom Abstandshalter umschlossen werden, und die zum Rand des Abstandshalters hin geöffnet sind.

Der Abstandshalter weist ein Höhenprofil auf. Es hat sich erwiesen, daß es für die Meßgenauigkeit vorteilhaft ist, wenn zwischen der Oberfläche eines Testfeldes und dem Meßkopf ein definierter Abstand eingestellt wird, der für jedes Testfeld des Streifens gleich ist. Dies ist wichtig, da die gemessene Intensität der reflektierten Strahlung stark abstandsabhängig ist. Bei herkömmlichen Teststreifen weisen unterschiedliche Testfelder unterschiedliche Dicken auf, die jedoch mit relativ großer Genauigkeit vorbekannt sind. Es ergibt sich damit das Problem, daß wenn der Meßkopf in konstantem Abstand zum Halter des Testelementes bewegt wird, unterschiedliche Abstände zwischen der Oberkante der Testfelder und dem Meßkopf auftreten. Wie bereits erwähnt führt dies zu Meßungenauigkeiten, die mathematisch nur unzureichend korrigiert werden können. Es hat sich herausgestellt, daß es am günstigsten ist, den Abstand zwischen der Oberfläche der Testfelder und Meßkopf konstant zu halten. Dies wird durch das Höhenprofil des Abstandshalters erreicht. Jedem Testfeld ist eine Meßöffnung und ein Auflagebereich des Meßkopfes zugeordnet. Bei Kenntnis des Testfeldes und seiner Dicke kann der diesem Testfeld zugeordnete Bereich des Abstandshalters, insbesondere der Auflagebereich des Meßkopfes, in seiner Dicke so gewählt werden, daß ein vorgegebener Abstand zwischen Meßkopf und Testfeldoberfläche entsteht.

Zur Messung liegt der Meßkopf mit einer Kante auf dem Abstandshalter auf. Durch verschiedene Höhen des Höhenprofils an der Auflagestelle des Meßkopfes kann somit erreicht werden, daß der Abstand zwischen Testfeldoberfläche und Meßkopf für jedes Testfeld einen konstanten, vorbestimmten Wert annimmt. Der Abstandshalter besitzt bevorzugt streifenförmige Bereiche, von denen jeder Bereich zu einer Meßöffnung gehört. Als vorteilhaft hat es sich erwiesen, wenn jeder dieser Bereiche ein Plateau von gleichbleibender Höhe aufweist und benachbarte Plateaus durch schräge Flächen miteinander verbunden sind.

Während des Ausweiteprozesses wird der Meßkopf durch eine Andruckvorrichtung auf die Anordnung aus Abstandshalter, Testelement und Testelementauflage gedrückt. Für den Abstand zwischen Testfeldoberfläche und Meßkopf sind demnach lediglich durch den Abstandshalter oder die Auflagekante des Meßkopfes bedingte Toleranzen relevant. Es hat sich herausgestellt, daß mit dieser Sandwich-Anordnung eines Testelementes zwischen Abstandshalter und Teststreifenauflage eine wesentlich genauere Auswertung möglich ist, als mit bisherigen Meßanordnungen.

Eine erfindungsgemäße Andruckvorrichtung kann beispielsweise durch eine Lagerung des Meßkopfes erreicht werden, bei der der Meßkopf durch sein Eigengewicht auf den Abstandshalter drückt. Als erfindungsgemäß bevorzugt hat sich jedoch eine Federkonstruktion herausgestellt, bei welcher der Meßkopf über einen Hebelarm an der Gerätebasis befestigt ist. Der Hebelarm ist senkrecht zur Längsachse des Abstandshalters angeordnet. Aufgrund der Länge des Hebelarmes in der Größenordnung von mehr als einem Dezimeter ergibt sich, daß beim Abfahren des Meßkopfes über das Höhenprofil des Abstandshalters keine nennenswerte Verdrehung der Meßoptik erfolgt. Zur Vermeidung einer Verkippung des Meßkopfes wird zur Auflage des Meßkopfes auf dem Abstandshalter eine Auflagekante gewählt. Diese Auflagekante besitzt bevorzugt eine Breite, die kleiner als die beschriebenen Plateaus des Höhenprofiles ist. Durch die beschriebene Anordnung wird gewährleistet, daß bei einer Relativbewegung von Meßkopf und Abstandshalter der Meßkopf dem Höhenprofil folgt, ohne daß ein nennenswertes Verkippen der Meßoptik erfolgt.

Mit der beschriebenen Hebelarmkonstruktion kann der Meßkopf über eine Feder, die einerseits an dem Hebelarm und andererseits an der Basis einer Hebelarmstütze angebracht ist, auf die Anordnung von Abstandshalter, Testelement und Testelementauflage gedrückt werden.

Die relative Führung von Meßkopf und Abstandshalter kann weiterhin dadurch verbessert werden, daß an dem Abstandshalter eine Führungsschiene angebracht ist. Die Führungsschiene sorgt dafür, daß sich der Meßkopf in Richtung senkrecht zur Längsachse des Abstandshalters oberhalb der Mitte einer Meßöffnung befindet. Aufgrund dieser Anordnung kann der Aufwand zur Positionierung des Abstandshalters weiter verringert werden.

Die Funktionsweise des Abstandshalters kann weiter dadurch verbessert werden, daß der Abstandshalter an seiner Unterseite, d. h. an der dem Testelement zugewandten Seite, eine Ausnehmung zur Aufnahme des Testelementes besitzt. Innerhalb dieser Ausnehmung verlaufen zwischen benachbarten Meßöffnungen Querstreben, die zum einen dazu dienen, das Testelement auf der Testelementauflage anzudrücken als auch Störstrahlung von benachbarten Testfeldern auszuschließen. Die Querstreben sind bevorzugt relativ schmal. bzw. verjüngen sich in Richtung auf den Teststreifen, da so die Kontaktfläche mit dem Testelement gering gehalten wird. Dies ist wichtig, um Verschleppungen von einem Testelement zum nächsten zu vermeiden.

Zum Abfahren der verschiedenen Testfelder eines Testelementes muß eine Relativbewegung von Meßkopf und Testelement erfolgen. Bevorzugt bleibt die Anordnung aus Abstandshalter, Testelement und Testelementauflage starr, während der Meßkopf durch eine Antriebsvorrichtung in Richtung der Längsachse des Testelementes bewegt wird.

Zur Erfindung gehört ebenfalls ein Verfahren zur Auswertung von Testelementen, bei dem sich ein Testelement zwischen einer Testelementauflage und einem Abstandshalter mit Höhenprofil und Meßöffnungen befindet und das Höhenprofil mehrere Auflagebereiche in verschiedenen Höhen aufweist, die den verschiedenen Meßöffnungen zugeordnet sind, und ein Meßkopf mit Sender und Empfänger entlang der Meßöffnungen des Abstandshalters bewegt wird, um Remissionswerte der Testfelder des Testelementes zu messen.

Zur Durchführung des erfindungsgemäßen Verfahrens wird die bereits geschilderte Auswertevorrichtung verwendet. Zur Auswertung eines Testelementes kann entweder wie bereits beschrieben jedes Testfeld mit ein und demselben Meßkopf ausgewertet werden oder es kann eine Auswertung mit mehreren Meßköpfen durchgeführt werden, bei denen jeder Meßkopf eine für ihn typische Meßstrahlung verwendet. Auf diese Weise können einzelne Testfelder auch mit unterschiedlichen Wellenlängen ausgewertet werden.

Es ist weiterhin möglich, daß statt eines Meßkopfes ein Array von Meßköpfen, die zueinander beweglich sind, auf dem Abstandshalter so abgelegt wird, daß sich jeder Meßkopf, gesteuert durch den Abstandshalter, in definiertem Abstand zur jeweiligen Testfeldoberfläche befindet.

Einen zentralen Aspekt der Erfindung bildet der Abstandshalter zur Auswertung von Testelementen, der eine oder mehrere Meßöffnungen besitzt, die nebeneinander angeordnet sind und der ein Höhenprofil aufweist, das in der einer bestimmten Meßöffnung zugeordneten Auflagefläche eine gleichbleibende Höhe besitzt und das in den verschiedenen Meßöffnungen zugeordneten Auflageflächen unterschiedliche Höhen besitzt.

Die vorliegende Erfindung weist demgemäß gegenüber dem Stand der Technik die Vorteile auf, daß durch die Verwendung eines Abstandshalters der Aufwand zur Justierung der Vorrichtung stark vermindert wird und eine bestehende Justierung über eine lange Betriebsdauer des Gerätes gehalten werden kann. Die Erfindung bietet weiterhin den Vorteil, daß eine genaue Auswertung von Testfeldern mit unterschiedlichen Dicken mit nur einem Meßkopf möglich ist. Es muß demnach nicht eine Vielzahl verschiedener Meßköpfe justiert werden.

Die allgemein beschriebene Erfindung wird anhand der folgenden Figuren näher spezifiziert:
- Figur 1:: Auswertevorrichtung
- Figur 2:: Abstandshalter (Oberseite)
- Figur 3:: Abstandshalter (Unterseite)

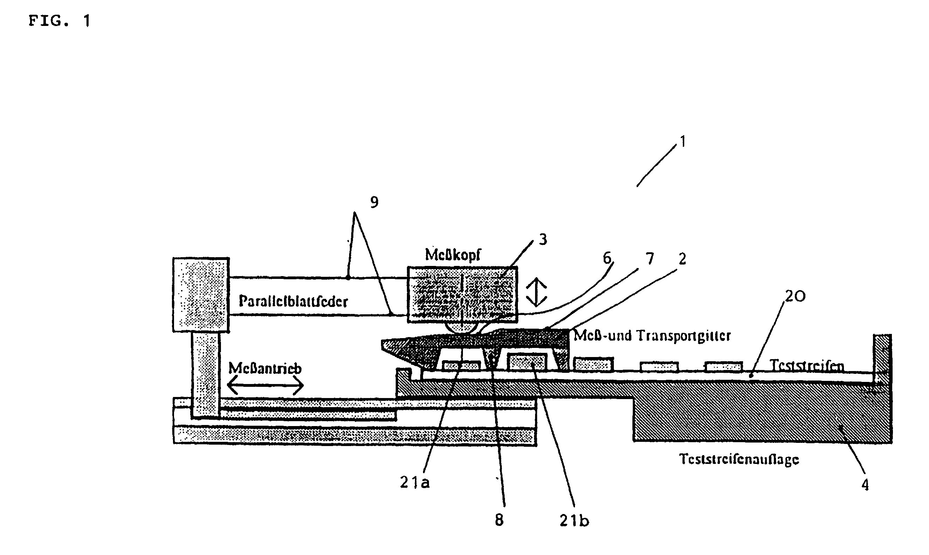

Figur 1 zeigt eine erfindungsgemäße Auswertevorrichtung (1) mit einem Meßkopf (3) und einer Anordnung aus Abstandshalter (2), Teststreifen (20) und Testelementauflage (4). Aus der Figur ist zu erkennen, daß das Testfeld (21a) eine geringere Dicke aufweist, als das Testfeld (21b). Der Abstandshalter weist oberhalb des Testfeldes (21b) eine größere Dicke auf als oberhalb des Testfeldes (21a). Es ist ebenfalls zu erkennen, daß das Höhenprofil des Abstandshalters (2) Plateaus (6, 7) besitzt, die zu der Teststreifenauflage (4) parallel sind. Die beiden Plateaus (6, 7) sind durch eine Schräge verbunden, so daß der Meßkopf von dem Plateau (6) ohne Verhaken zu dem Plateau (7) geschoben werden kann. Die Verschiebung des Meßkopfes über den Teststreifen erfolgt durch einen Antriebsmotor. Während des gesamten Meßvorganges wird der Meßkopf (3) durch eine Parallelblattfeder (9) auf den Abstandshalter (2) gedrückt. Zum Ausdruck des Teststreifens (20) besitzt der Abstandshalter (2) Querstreben (8), die zwischen Meßöffnungen des Abstandshalters verlaufen. Auf diese Weise kann gewährleistet werden, daß der Teststreifen im Bereich der Testfelder auf die Unterlage angedrückt wird.

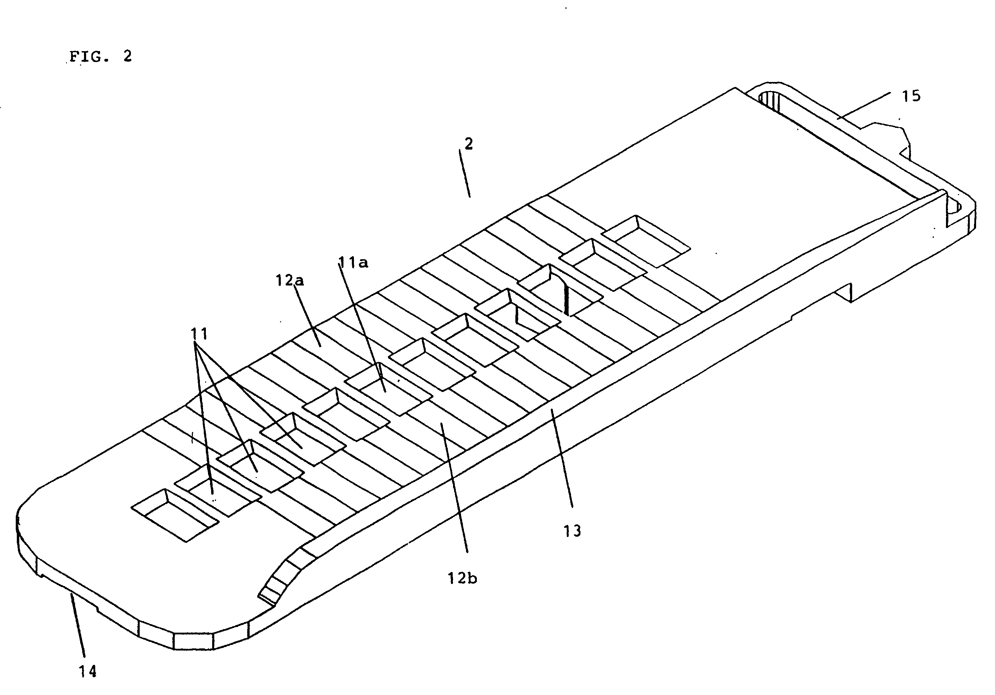

Figur 2 zeigt einen erfindungsgemäßen Abstandshalter (2) mit einer Vielzahl von Meßöffnungen (11). Zu jeder Meßöffnung gehört ein Plateau des Abstandshalters, zum Beispiel gehört zu der Meßöffnung (11a) das Plateau (12), das in zwei Teile (12a, 12b) zerfällt. Bei dem Meßprozeß liegt die Auflagekante des Meßkopfes auf einer dieser Flächen (12a oder 12b) auf.

Figur 2 zeigt die Führungsschiene (13), durch die der Meßkopf oberhalb einer Meßöffnung positioniert wird.

Es ist ebenfalls eine Ausnehmung (14) in der Unterseite des Abstandshalters (2) zu erkennen, in der ein Testelement zu liegen kommt.

Zur Installation des Abstandshalters (2) innerhalb einer Auswertevorrichtung besitzt der Abstandshalter (2) ebenfalls eine Befestigungslasche (15).

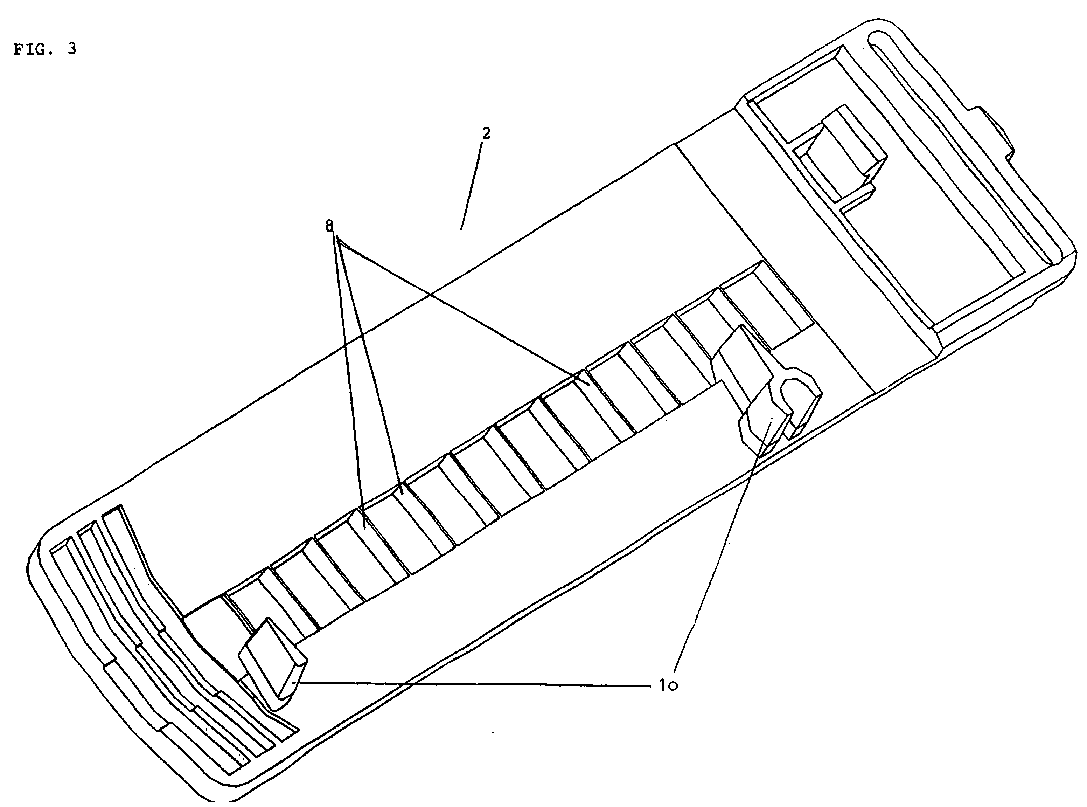

Figur 3 zeigt eine Ansicht des Abstandshalters (2) von der Unterseite. Zu erkennen sind die Querstreben (8) und Führungselemente (10), an denen der Teststreifen anliegt, während er sich unter dem Abstandshalter befindet. Zur Aufnahme dieser Führungselemente besitzt die Testelementauflage (4) Ausnehmungen, so daß die Führungselemente keinen Einfluß auf den Abstand von Abstandshalter und Testelementauflage ausüben.

### Bezugszeichenliste

- (1): Auswertevorrichtung
- (2): Abstandshalter
- (3): Meßkopf
- (4): Testelementauflage
- (6, 7): Plateaus
- (8): Querstrebe
- (9): Parallelblattfeder
- (10): Führungselemente
- (11, 11a): Meßöffnungen
- (12a, 12b): Plateau
- (13): Führungsschiene
- (14): Ausnehmung
- (15): Befestigungslaschen
- (20): Testelement
- (21a, 21b): Testfeldoberfläche

## Patentansprüche

1. Auswertevorrichtung (1) zur reflektometrischen Auswertung von Testelementen mit nebeneinander angeordneten Testfeldern beinhaltend
- einen Meßkopf (3), der einen Sender und einen Empfänger besitzt,
- eine Testelementauflage (4), auf welcher ein zu untersuchendes Testelement gelagert wird,
- einen Abstandshalter (2) mit mehreren Meßöffnungen (11), der sich zwischen Testelement (20) und Meßkopf (3) befindet und einen Abstand zwischen Testfeldoberfläche (21a, 21b) des Teststreifens und Meßkopf (3) definiert,
und das Testelement sich zwischen Testelementauflage und Abstandshalter befindet und der Meßkopf auf dem Abstandshalter aufliegt,
wobei der Abstandshalter (2) ein Höhenprofil mit zwei oder mehr Auflagebereichen (6, 7) in verschiedenen Höhen für den Meßkopf aufweist und die zwei oder mehr Auflagebereiche verschiedenen Meßöffnungen zugeordnet sind.

2. Auswertevorrichtung gemäß Anspruch 1, **dadurch gekennzeichnet, daß** der Meßkopf (3) durch eine Andruckvorrichtung auf die Anordnung aus Abstandshalter (2), Testelement (20) und Testelementauflage (4) gedrückt wird.

3. Auswertevorrichtung gemäß Anspruch 1, **dadurch gekennzeichnet, daß** der Abstandshalter (2) zwei oder mehr rechteckige Meßöffnungen (11) besitzt, die so angeordnet und in ihrer Größe gemessen sind, daß ihre Fläche der eines Testfeldes (21a, 21b) entspricht oder über diese hinausgeht.

4. Auswertevorrichtung gemäß Anspruch 1, **dadurch gekennzeichnet, daß** der Abstandshalter (2) eine Führungsschiene (13) zur Führung des Meßkopfes (3) bei seiner Bewegung auf dem Abstandshalter besitzt.

5. Auswertevorrichtung gemäß Anspruch 1, **dadurch gekennzeichnet, daß** der Abstandshalter (2) auf seiner Unterseite, d. h. der dem Testelement (20) zugewandten Seite eine Ausnehmung für ein Testelement besitzt und weiterhin Querstreben (8) aufweist, die zwischen benachbarten Meßöffnungen (11) verlaufen.

6. Auswertevorrichtung gemäß Anspruch 1 mit einer Antriebsvorrichtung für den Meßkopf (3), die den Meßkopf auf dem Abstandshalter von einer Meßöffnung (11) zur nächsten bewegt.

7. Auswertevorrichtung gemäß Anspruch 1, **dadurch gekennzeichnet, daß** der Abstand zwischen der Oberfläche eines Testfeldes (21a) und der zugeordneten Auflagefläche (6) im wesentlichen konstant ist

8. Verfahren zur Auswertung von Testelementen, bei dem sich ein Testelement (20) zwischen einer Testelementauflage (4) und einem Abstandshalter (2) mit Höhenprofil und Meßöffnungen (11) befindet und das Höhenprofil mehrene Auflagebereiche in verschiedenen Höhen aufweist, die den verschiedenen Meßöffnungen zugeordnet sind, und ein Meßkopf (3) mit Sender und Empfänger entlang der Meßöffnungen (11) des Abstandshalters (2) bewegt wird, um Remissionswerte der Testfelder des Testelementes zu messen.

## Claims

1. Evaluation device (1) for the reflectometric evaluation of test elements with adjacent test fields comprising
- a measuring head (3) with an emitter and a detector,
- a test element support (4) on which a test element to be examined is mounted,
- a spacer (2) having several measuring openings (11) said spacer being located between test element (20) and measuring head (3) and defining a distance between the test field surface (21a, 21b) of the test strip and the measuring head (3),
and the test element is located between the test element support and the spacer, and the measuring head rests on the spacer,
wherein the spacer (2) has a height profile with two or more supporting areas (6, 7) at different heights for the measuring head and the two or more supporting areas are associated with different measuring openings.

2. Evaluation device as claimed in claim 1, **characterized in that** a pressure device presses the measuring head (3) onto the arrangement consisting of spacer (2), test element (20) and test element support (4).

3. Evaluation device as claimed in claim 1, **characterized in that** spacer (2) has two or more rectangular measuring openings (11) whose arrangement and size are selected such that their areas correspond to the area of a test field (21a, 21b) or exceed it.

4. Evaluation device as claimed in claim 1, **characterized in that** spacer (2) has a guide rail (13) to guide the measuring head (3) when it moves on the spacer.

5. Evaluation device as claimed in claim 1, **characterized in that** the underside of the spacer (2) i.e. the side facing the test element (20) has a recess for a test element and also cross bars (8) which extend between adjacent measuring openings (11).

6. Evaluation device as claimed in claim 1 having a drive unit for the measuring head (3) which moves the measuring head on the spacer from one measuring opening (11) to the next.

7. Evaluation device as claimed in claim 1, **characterized in that** the distance between the surface of a test field (21a) and the associated support surface (6) is essentially constant.

8. Method for evaluating test elements in which a test element (20) is located between a test element support (4) and a spacer (2) with a height profile and measuring openings (11) and the height profile has several support areas at different heights which are associated with the different measuring openings and a measuring head (3) having an emitter and detector is moved along the measuring openings (11) of the spacer (2) in order to measure the reflectance values of the test fields of the test element.

## Revendications

1. Dispositif d'évaluation (1) pour l'évaluation réflectométrique d'éléments d'essais comprenant des champs d'essais disposés les uns à côté des autres, comprenant
- une tête de mesure (3) qui possède un émetteur et un récepteur,
- un support d'élément d'essai (4) sur lequel vient se disposer un élément d'essai à analyser,
- une pièce d'écartement (2) avec plusieurs ouvertures de mesure (11), qui est disposée entre l'élément d'essai (20) et la tête de mesure (3) et qui définit un écartement entre la surface des champs d'essais (21a, 21b) de la bandelette d'essai et la tête de mesure (3),
- l'élément d'essai se trouvant entre le support de l'élément d'essai et la pièce d'écartement, et la tête de mesure s'appuyant sur la pièce d'écartement,
dans lequel la pièce d'écartement (2) présente un profil en hauteur avec deux ou plusieurs zones de support (6, 7) à différentes hauteurs pour la tête de mesure, et lesdites deux ou plusieurs zones de support sont attribuées à différentes ouvertures de mesure.

2. Dispositif d'évaluation selon la revendication 1, **caractérisé en ce que** la tête de mesure (3) est pressée via un dispositif de pression contre l'agencement constitué par la pièce d'écartement (2), l'élément d'essai (20) et le support d'élément d'essai (4).

3. Dispositif d'évaluation selon la revendication 1, **caractérisé en ce que** la pièce d'écartement (2) possède deux ou plusieurs ouvertures de mesure rectangulaires (11) qui sont disposées et qui sont dimensionnées de telle sorte que leur surface correspond à celle d'un champ d'essai (21a, 21b) ou fait saillie par rapport à ladite surface.

4. Dispositif d'évaluation selon la revendication 1, **caractérisé en ce que** la pièce d'écartement (2) possède un rail de guidage (13) pour guider la tête de mesure (3) lors de son mouvement sur la pièce d'écartement.

5. Dispositif d'évaluation selon la revendication 1, **caractérisé en ce que** la pièce d'écartement (2) possède, sur son côté inférieur, c'est-à-dire le côté tourné vers l'élément d'essai (20), un évidement pour un élément d'essai et présente, en outre, des nervures transversales (8) qui s'étendent entre des ouvertures de mesure voisines (11).

6. Dispositif d'évaluation selon la revendication 1, comprenant un dispositif de commande pour la tête de mesure (3) qui déplace la tête de mesure sur la pièce d'écartement d'une ouverture de mesure (11) à la suivante.

7. Dispositif d'évaluation selon la revendication 1, **caractérisé en ce que** la distance entre la surface d'un champ d'essai (21a) et la surface de support correspondante (6) est essentiellement constante.

8. Procédé pour l'évaluation d'éléments d'essais, dans lequel on dispose un élément d'essai (20) entre un support d'élément d'essai (4) et une pièce d'écartement (2) avec un profil en hauteur et des ouvertures de mesure (11), le profil en hauteur présentant plusieurs zonés de support à différentes hauteurs qui sont attribuées aux différentes ouvertures de mesure, et on déplace une tête de mesure (3) avec un émetteur et un récepteur le long des ouvertures de mesure (11) de la pièce d'écartement (2) afin de mesurer des valeurs de rémission des champs d'essais de l'élément d'essai.
